# EUROPEAN PATENT APPLICATION

(11) **EP 4 625 796 A1**
(43) Date of publication of application: **01.10.2025**
(21) Application number: 24221888.1
(22) Date of filing: 19.12.2024
(51) Int. Cl.: H02M 1/32

(54) **POWER CONVERTER, METHOD FOR CONTROLLING POWER CONVERTER, AND POWER SYSTEM**

(30) Priority: 25.03.2024 CN 202410347159
(71) Applicant: Sungrow Power Supply Co., Ltd., Hefei, Anhui 230088 (CN)
(72) Inventor: LI, Bijie, 230088 Hefei (CN); WANG, Lei, 230088 Hefei (CN); HUANG, Zhifeng, 230088 Hefei (CN); ZHOU, Pengfei, 230088 Hefei (CN)
(74) Representative: Harrison, Philip Mark

(57) **Abstract**

Provided are a power converter, a method for controlling a power converter, and a power system. The power converter includes a boost circuit, an inverter circuit, a bridge circuit, a switching circuit, and a controller. The boost circuit has an input terminal connected to a direct current power supply and an output terminal connected to each of an input terminal of the inverter circuit and an input terminal of the bridge circuit. The switching circuit is connected to each of an output terminal of the bridge circuit and ground. The switching circuit at least includes a plurality of controllable switches. The controller is configured to control, subsequent to the direct current power supply entering an off state, the plurality of controllable switches to be switched on or switched off to form a discharge loop by the boost circuit, the bridge circuit, and the switching circuit, for discharging a common mode voltage to ground at the input terminal of the boost circuit to be within a safe voltage. In this way, a discharge voltage at the input terminal of the boost circuit can be satisfied.

## Description

### FIELD

The present disclosure relates to the field of power supply technologies, and more particularly, to a power converter, a method for controlling a power converter, and a power system.

### BACKGROUND

In the related art, a photovoltaic power generation system includes an inverter and an optimizer or a shutdown device arranged between the inverter and a photovoltaic assembly. When the photovoltaic power generation system is in normal operation, a direct current outputted by the photovoltaic assembly is transmitted to the inverter through the optimizer or the shutdown device, is boosted and inverted by the inverter, and then is outputted to a power grid or supplies power to a load. When the photovoltaic power generation system needs maintenance or the inverter stops in an emergency, the optimizer or the shutdown device enters a safe mode. In this mode, an input voltage of the inverter is cut off or controlled to be within a safe voltage. However, an input common mode voltage to ground of the inverter is much higher than the safe voltage and cannot meet a discharge voltage requirement.

### SUMMARY

The present disclosure aims to solve at least one of the technical problems in the related art to some extent. Therefore, a first objective of the present disclosure is to provide a power converter, capable of rapidly discharging a common mode voltage to ground at an input terminal of a boost circuit to be within a safe voltage, for meeting a discharge voltage requirement.

A second objective of the present disclosure is to provide a method for controlling a power converter.

A third objective of the present disclosure is to provide a power system.

To achieve the above objectives, a power converter is provided according to an embodiment in a first aspect of the present disclosure. The power converter includes a boost circuit, an inverter circuit, a bridge circuit, a switching circuit, and a controller. The boost circuit has an input terminal connected to a direct current power supply and an output terminal connected to each of an input terminal of the inverter circuit and an input terminal of the bridge circuit. The switching circuit is connected to each of an output terminal of the bridge circuit and ground. The switching circuit at least includes a plurality of controllable switches. The controller is configured to control, subsequent to the direct current power supply entering an off state, the plurality of controllable switches to be switched on or switched off to form a discharge loop by the boost circuit, the bridge circuit, and the switching circuit, for discharging a common mode voltage to ground at the input terminal of the boost circuit to be within a safe voltage.

The power converter according to the embodiment of the present disclosure includes the bridge circuit and the switching circuit. The input terminal of the bridge circuit is connected to the output terminal of the boost circuit. The switching circuit is connected to each of the output terminal of the bridge circuit and the ground, and at least includes the plurality of controllable switches. Subsequent to the direct current power supply entering the off state, the plurality of controllable switches are controlled to be switched on or switched off to form the discharge loop by the boost circuit, the bridge circuit, and the switching circuit, for discharging the common mode voltage to ground at the input terminal of the boost circuit to be within the safe voltage. Therefore, a positive input terminal of the boost circuit and a negative input terminal of the boost circuit are short-circuited through the bridge circuit and the switching circuit, for discharging a common mode voltage to ground at the positive input terminal of the boost circuit and a common mode voltage to ground at the negative input terminal of the boost circuit simultaneously, in such a manner that the common mode voltage to ground at the input terminal of the boost circuit is rapidly discharged to be within the safe voltage, for meeting the discharge voltage requirement.

According to an embodiment of the present disclosure, the bridge circuit includes a first switch, a second switch, a third switch, and a fourth switch, each of a first terminal of the first switch and a first terminal of the second switch being connected to a first terminal of the switching circuit, each of a second terminal of the first switch and a first terminal of the third switch being connected to a negative output terminal of the boost circuit, each of a second terminal of the second switch and a first terminal of the fourth switch being connected to a positive output terminal of the boost circuit, and each of a second terminal of the third switch and a second terminal of the fourth switch being connected to a second terminal of the switching circuit.

According to an embodiment of the present disclosure, the first switch, the second switch, the third switch, and the fourth switch are all controllable switches or uncontrollable switches. The controller is further configured to control, when the first switch, the second switch, the third switch, and the fourth switch are all controllable switches, the first switch, the second switch, the third switch, and the fourth switch to be switched on or switched off, to form the discharge loop by the boost circuit, the bridge circuit, and the switching circuit.

According to an embodiment of the present disclosure, each of the first switch, the second switch, the third switch, and the fourth switch is a diode, a cathode of the diode being the first terminal of a corresponding one of the first switch, the second switch, the third switch, and the fourth switch, and an anode of the diode being the second terminal of the corresponding one of the first switch, the second switch, the third switch, and the fourth switch.

According to an embodiment of the present disclosure, the switching circuit includes a first controllable switch, a second controllable switch, a third controllable switch, and a fourth controllable switch, a first terminal of the first controllable switch being the first terminal of the switching circuit, a second terminal of the first controllable switch being connected to a first terminal of the second controllable switch to form a first node, a first terminal of the third controllable switch being the second terminal of the switching circuit, a second terminal of the third controllable switch being connected to a first terminal of the fourth controllable switch to form a second node, the second node being connected to the first node, a second terminal of the second controllable switch and a second terminal of the fourth controllable switch being connected as a third terminal of the switching circuit, and the third terminal of the switching circuit being connected to the ground.

According to an embodiment of the present disclosure, the power converter further includes an energy dissipation element connected in series in the discharge loop.

According to an embodiment of the present disclosure, the energy dissipation element includes one of a voltage source, a resistor and a capacitor that are connected in parallel, a resistor, or an inductor.

According to an embodiment of the present disclosure, the energy dissipation element is connected in series in at least one of the following manners: between at least one of the first node and the second node, between the third terminal of the switching circuit and the ground, between the first terminal of the switching circuit and the first node, between the first node and the third terminal of the switching circuit, between the second terminal of the switching circuit and the second node, or between the second node and the third terminal of the switching circuit.

According to an embodiment of the present disclosure, the controller is specifically configured to: control the first controllable switch and the fourth controllable switch to be switched on and the second controllable switch and the third controllable switch to be switched off for discharging a common mode voltage to ground at a positive input terminal of the boost circuit, and control the second controllable switch and the third controllable switch to be switched on and the first controllable switch and the fourth controllable switch to be switched off for discharging a common mode voltage to ground at a negative input terminal of the boost circuit; or control the second controllable switch and the fourth controllable switch to be in an on state, control the first controllable switch to be switched on and the third controllable switch to be switched off for discharging the common mode voltage to ground at the positive input terminal of the boost circuit, and control the third controllable switch to be switched on and the first controllable switch to be switched off for discharging the common mode voltage to ground at the negative input terminal of the boost circuit; or control each of the first controllable switch, the second controllable switch, the third controllable switch, and the fourth controllable switch to be in an on state, for discharging the common mode voltage to ground at the positive input terminal of the boost circuit and the common mode voltage to ground at the negative input terminal of the boost circuit simultaneously.

According to an embodiment of the present disclosure, the power converter further includes: a first voltage detection circuit configured to detect the common mode voltage to ground at the positive input terminal of the boost circuit, in which the controller is further configured to discharge the common mode voltage to ground at the positive input terminal of the boost circuit in response to the common mode voltage to ground at the positive input terminal of the boost circuit reaching a predetermined voltage value; and/or a second voltage detection circuit configured to detect the common mode voltage to ground at the negative input terminal of the boost circuit, in which the controller is further configured to discharge the common mode voltage to ground at the negative input terminal of the boost circuit in response to the common mode voltage to ground at the negative input terminal of the boost circuit reaching the predetermined voltage value.

According to an embodiment of the present disclosure, a shutdown circuit is further connected in series between the direct current power supply and the input terminal of the boost circuit. When the shutdown circuit is in a safe mode, an output voltage of the direct current power supply is smaller than a predetermined voltage threshold to enable the direct current power supply to enter the off state.

To achieve the above objectives, a method for controlling a power converter is provided according to an embodiment in a second aspect of the present disclosure. The method is applied in the above-mentioned power converter, and includes: controlling, subsequent to the direct current power supply entering the off state, the plurality of controllable switches to be switched on or switched off to form the discharge loop by the boost circuit, the bridge circuit, and the switching circuit, for discharging the common mode voltage to ground at the input terminal of the boost circuit to be within the safe voltage.

With the method for controlling the power converter according to the embodiments of the present disclosure, subsequent to the direct current power supply entering the off state, the plurality of controllable switches are controlled to be switched on or switched off to form the discharge loop by the boost circuit, the bridge circuit, and the switching circuit, for discharging the common mode voltage to ground at the input terminal of the boost circuit to be within the safe voltage. Therefore, the positive input terminal of the boost circuit and the negative input terminal of the boost circuit are short-circuited through the bridge circuit and the switching circuit, for discharging the common mode voltage to ground at the positive input terminal of the boost circuit and the common mode voltage to ground at the negative input terminal of the boost circuit simultaneously, in such a manner that the common mode voltage to ground at the input terminal of the boost circuit is rapidly discharged to be within the safe voltage, for meeting the discharge voltage requirement.

To achieve the above objectives, a power system is provided according to an embodiment in a third aspect of the present disclosure. The power system includes a direct current power supply and the above-mentioned power converter. The power converter has an input terminal connected to the direct current power supply.

For the power system according to the embodiments of the present disclosure, with the above-mentioned power converter, the positive input terminal of the boost circuit and the negative input terminal of the boost circuit are short-circuited through the bridge circuit and the switching circuit, for discharging the common mode voltage to ground at the positive input terminal of the boost circuit and the common mode voltage to ground at the negative input terminal of the boost circuit simultaneously, in such a manner that the common mode voltage to ground at the input terminal of the boost circuit is rapidly discharged to be within the safe voltage, for meeting the discharge voltage requirement.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

FIG. 1 is a schematic structural view of a photovoltaic power generation system in the related art.
FIG. 2 is a schematic structural view of a power converter according to an embodiment of the present disclosure.
FIG. 3 is a schematic view of a circuit of a power converter according to first embodiment of the present disclosure.
FIG. 4a is a view of a discharge loop in which the power converter illustrated in FIG. 3 discharges a common mode voltage to ground at a positive input terminal of a boost circuit and a common mode voltage to ground at a negative input terminal of the boost circuit simultaneously.
FIG. 4b is another view of a discharge loop in which the power converter illustrated in FIG. 3 discharges a common mode voltage to ground at a positive input terminal of a boost circuit and a common mode voltage to ground at a negative input terminal of the boost circuit simultaneously.
FIG. 5 is a schematic view of a circuit of a power converter according to second embodiment of the present disclosure.
FIG. 6 is a view of a discharge loop in which the power converter illustrated in FIG. 5 discharges a common mode voltage to ground at a positive input terminal of a boost circuit and a common mode voltage to ground at a negative input terminal of the boost circuit simultaneously.
FIG. 7 is a schematic view of a circuit of a power converter according to third embodiment of the present disclosure.
FIG. 8 is a schematic view of a circuit of a power converter according to fourth embodiment of the present disclosure.
FIG. 9 is a schematic view of a circuit of a power converter according to fifth embodiment of the present disclosure.
FIG. 10a is a view of a discharge loop in which the power converter illustrated in FIG. 7 discharges a common mode voltage to ground at a positive input terminal of a boost circuit.
FIG. 10b is a view of a discharge loop in which the power converter illustrated in FIG. 7 discharges a common mode voltage to ground at a negative input terminal of a boost circuit.
FIG. 11a is a view of a discharge loop in which the power converter illustrated in FIG. 8 discharges a common mode voltage to ground at a positive input terminal of a boost circuit.
FIG. 11b is a view of a discharge loop in which the power converter illustrated in FIG. 8 discharges a common mode voltage to ground at a negative input terminal of a boost circuit.
FIG. 12 is a schematic view of a circuit of a power converter according to sixth embodiment of the present disclosure.
FIG. 13a is a view of a discharge loop in which the power converter illustrated in FIG. 12 discharges a common mode voltage to ground at a positive input terminal of a boost circuit.
FIG. 13b is a view of a discharge loop in which the power converter illustrated in FIG. 12 discharges a common mode voltage to ground at a negative input terminal of a boost circuit.
FIG. 14 is a schematic view of a circuit of a power converter according to seventh embodiment of the present disclosure.
FIG. 15 is a flowchart illustrating a method for controlling a power converter according to some embodiments of the present disclosure.
FIG. 16 is a schematic diagram showing a structure of a power system according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative, and are intended to explain, rather than limitations on the present disclosure.

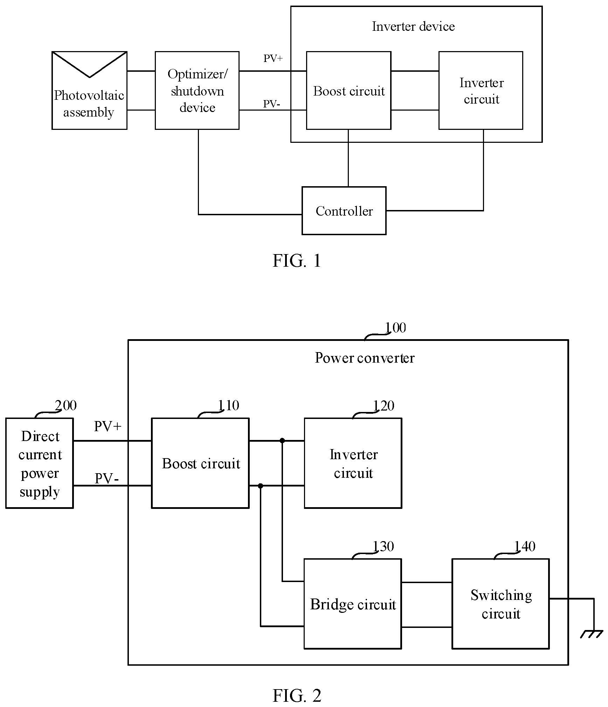

FIG. 1 is a schematic structural view of a photovoltaic power generation system in the related art. As illustrated in FIG. 1, the photovoltaic power generation system includes a photovoltaic assembly, an optimizer/shutdown device and an inverter device, and a controller that are sequentially connected. The inverter device may include a front-end circuit such as a boost circuit and a back-end circuit such as an inverter circuit. The controller is configured to control the optimizer/shutdown device, the boost circuit, and the inverter circuit.

When the photovoltaic power generation system needs maintenance or the inverter device stops in an emergency, the optimizer or the shutdown device enters a safe mode. In the safe mode, a PV voltage (specifically, a voltage difference between PV+ and PV-, i.e., an input voltage of the boost circuit) is cut off or controlled to be within a safe voltage (e.g., 30V) by the optimizer or the shutdown device.

However, a common mode voltage of PV+ to ground (specifically, a voltage difference between PV+ and the ground, i.e., a common mode voltage to ground at a positive input terminal of the boost circuit) and a common mode voltage of PV- to ground (specifically, a voltage difference between PV- and the ground, i.e., a common mode voltage to ground at a negative input terminal of the boost circuit) are much higher than the safe voltage. In addition, the common mode voltage of PV+ to ground and the common mode voltage of PV- to ground are related to a distributed capacitance of the photovoltaic assembly to ground. The distributed capacitance of the photovoltaic assembly to ground is restricted by an actual state of the photovoltaic assembly, resulting in a difference between a distributed capacitance of PV+ to ground and a distributed capacitance of PV- to ground. Further, as a difference between the distributed capacitance of PV+ to ground and the distributed capacitance of PV-to ground increases, a larger one of the distributed capacitance of PV+ to ground and the distributed capacitance of PV- to ground has a relatively slow discharge speed. The discharge speed is restricted by the larger one of the distributed capacitance of PV+ to ground and the distributed capacitance of PV- to ground. Therefore, even if the optimizer or the shutdown device discharges a PV voltage to be within the safe voltage, the common mode voltage of PV+ to ground or the common mode voltage of PV- to ground is unable to be discharged to be within the safe voltage quickly, failing to meet a discharge voltage requirement. For example, a requirement in the specification that a discharge voltage should drop to be within 30V within 30s fails to be met.

On this basis, in an embodiment of the present disclosure, a power converter is provided. A bridge circuit and a switching circuit are arranged. In addition, the switching circuit at least includes a plurality of controllable switches. The plurality of controllable switches are controlled to be switched on or switched off to form a discharge loop by the boost circuit, the bridge circuit, and the switching circuit, for rapidly discharging a common mode voltage to ground at an input terminal of the boost circuit to meet the discharge voltage requirement.

The power converter according to an embodiment of the present disclosure is described below with reference to the accompanying drawings.

FIG. 2 is a schematic structural view of a power converter according to an embodiment of the present disclosure.

As illustrated in FIG. 2, the power converter 100 includes a boost circuit 110, an inverter circuit 120, a bridge circuit 130, a switching circuit 140, and a controller (not illustrated).

The boost circuit 110 has an input terminal connected to a direct current power supply 200 and an output terminal connected to each of an input terminal of the inverter circuit 120 and an input terminal of the bridge circuit 130. The switching circuit 140 is connected to each of an output terminal of the bridge circuit 130 and ground, and at least includes a plurality of controllable switches. The controller is configured to control, subsequent to the direct current power supply 200 entering an off state, the plurality of controllable switches to be switched on or switched off to form a discharge loop by the boost circuit 110, the bridge circuit 130, and the switching circuit 140, for discharging a common mode voltage to ground at the input terminal of the boost circuit 110 to be within a safe voltage.

In an exemplary embodiment of the present disclosure, the direct current power supply 200 includes, but is not limited to, a photovoltaic assembly, a storage battery, a fuel cell, or the like. Quantities of and a connection method between the photovoltaic assembly, the storage battery, or the fuel cell are not limited. When the direct current power supply 200 is the photovoltaic assembly, a system including the direct current power supply 200 and the power converter 100 is the photovoltaic power generation system. When the direct current power supply 200 is the storage battery or the fuel cell, a system including the direct current power supply 200 and the power converter 100 is an energy storage system. That is, the power converter 100 of the present disclosure can be applied in the photovoltaic power generation system, the energy storage system, and other scenarios where a common mode voltage needs to be discharged.

The boost circuit 110 may be a conventional BOOST circuit, which is configured to boost a direct current voltage outputted from the direct current power supply 200 and provide the boosted direct current voltage to a back-end circuit, e.g., to the inverter circuit 120. The inverter circuit 120 is configured to invert the boosted direct current voltage, and then output to a power grid, or provide to an alternating current load, or directly provide to a direct current load.

Normally, the bridge circuit 130 is a rectifying circuit. However, in the present disclosure, the bridge circuit 130 is mainly configured to provide a corresponding path to form a discharge loop in conjunction with the switching circuit 140, such that a common mode voltage to ground at a positive input terminal of the boost circuit 110 and a common mode voltage to ground at a negative input terminal of the boost circuit 110 can be discharged. The bridge circuit 130 includes, but is not limited to, an uncontrollable bridge circuit or a controllable bridge circuit. For example, the bridge circuit 130 is composed of diodes. The discharge loop is formed by using unidirectional conductivity of the diode in conjunction with the switching circuit 140. For example, the bridge circuit 130 is composed of switching tubes. The discharge loop is formed through controlling the switching tube to be switched on or switched off in conjunction with the switching circuit 140.

The switching circuit 140 cooperates with the bridge circuit 130 to enable the positive input terminal of the boost circuit 110 to be grounded sequentially through the boost circuit 110, the bridge circuit 130, and the switching circuit 140, for discharging the common mode voltage to ground at the positive input terminal of the boost circuit 110, or to enable the negative input terminal of the boost circuit 110 to be grounded sequentially through the boost circuit 110, the bridge circuit 130, and the switching circuit 140, for discharging the common mode voltage to ground at the negative input terminal of the boost circuit 110. The switching circuit 140 at least includes the plurality of controllable switches. Subsequent to the direct current power supply 200 entering the off state, the plurality of controllable switches are controlled to be switched on or switched off to form the discharge loop by the boost circuit 110, the bridge circuit 130, and the switching circuit 140, for discharging the common mode voltage to ground at the positive input terminal of the boost circuit 110 and the common mode voltage to ground at the negative input terminal of the boost circuit 110 to be within the safe voltage. "The direct current power supply 200 entering the off state" means that the direct current power supply 200 stops inputting a direct current voltage to the boost circuit 110 or the inputted direct current voltage is within the safe voltage, which can be realized by the optimizer, the shutdown device, or the like.

During normal operation of a system including the direct current power supply 200 and the power converter 100, the bridge circuit 130 and the switching circuit 140 do not operate. The direct current power supply 200 outputs a direct current voltage. The boost circuit 110 boosts the direct current voltage and provide the boosted direct current voltage to a subsequent circuit, e.g., to the inverter circuit 120, in which case the boosted direct current voltage is inverted into an alternating current by the inverter circuit 120 to be outputted to the power grid or the alternating current load.

When the system needs maintenance or the inverter (including the boost circuit 110 and the inverter circuit 120) stops in an emergency, the inverter may be controlled to stop operation, and then the direct current power supply 200 may be controlled to enter the off state. For example, the optimizer or the shutdown device may be controlled to enter the safe mode, to enable the direct current power supply 200 to stop inputting the direct current voltage to the boost circuit 110 or the inputted direct current voltage to be within the safe voltage. That is, the input voltage of the boost circuit 110 (i.e., a PV voltage, which specifically means a voltage difference between PV+ and PV-) is made zero or to be within the safe voltage range. Then, the plurality of controllable switches in the switching circuit 140 are controlled by the controller to be switched on or switched off, to enable the positive input terminal of the boost circuit 110 to be grounded sequentially through the boost circuit 110, the bridge circuit 130, and the switching circuit 140, for rapidly discharging the common mode voltage to ground at the positive input terminal of the boost circuit 110 (i.e., the common mode voltage of PV+ to ground), or to enable the negative input terminal of the boost circuit 110 to be grounded sequentially through the boost circuit 110, the bridge circuit 130, and the switching circuit 140, for rapidly discharging the common mode voltage to ground at the negative input terminal of the boost circuit 110 (i.e., the common mode voltage of PV- to ground). For example, the plurality of controllable switches are controlled to be switched on, to enable the positive input terminal of the boost circuit and the negative input terminal of the boost circuit 110 to be short-circuited, for discharging the common mode voltage to ground at the positive input terminal of the boost circuit 110 and the common mode voltage to ground at the negative input terminal of the boost circuit 110 simultaneously, achieving rapid discharging.

It should be noted that, when the bridge circuit 130 is an uncontrollable bridge circuit, it is unnecessary to control the bridge circuit 130; and when the bridge circuit 130 is a controllable bridge circuit, the controller further needs to control the bridge circuit 130. In addition, operation processes of the inverter, the bridge circuit 130, and the switching circuit 140 that are described above may be realized through control of one controller or different controllers. No specific limitations are imposed in this regard.

In the above embodiments, by forming the discharge loop for the input terminal of the boost circuit through the bridge circuit and the switching circuit, the common mode voltage to ground at the positive input terminal of the boost circuit and the common mode voltage to ground at the negative input terminal of the boost circuit can be rapidly discharged to be within the safe voltage to meet the discharge voltage requirement, e.g., a requirement in the specification that the voltage should drop to be within 30V within 30s.

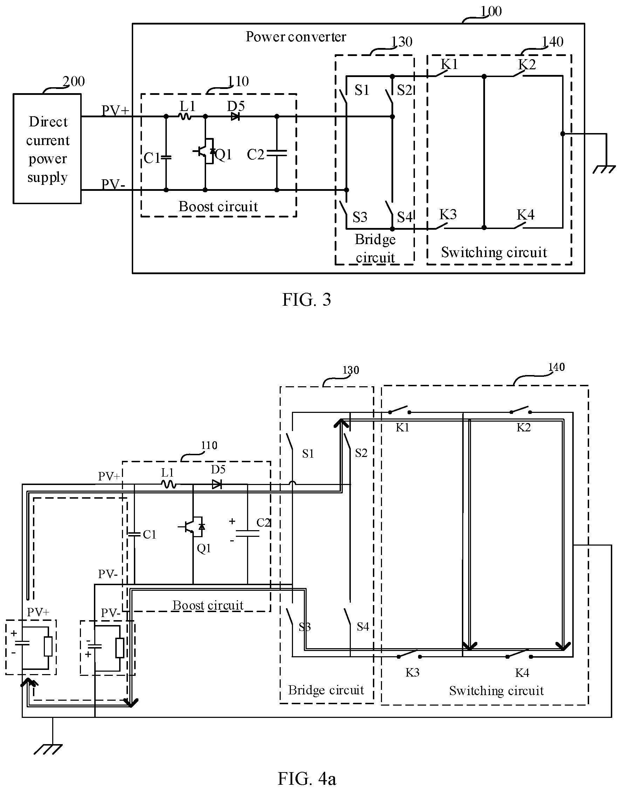

In some embodiments, as illustrated in FIG. 3, the boost circuit 110 may include a first inductor L1, a fifth diode D5, and a first switching tube Q1. The first inductor L1 has a terminal serving as the positive input terminal of the boost circuit 110 and another terminal connected to each of an anode of the fifth diode D5 and a first terminal of the first switching tube Q1. The fifth diode D5 has a cathode serving as the positive output terminal of the boost circuit 110. The first switching tube Q1 has a second terminal serving as the negative input terminal of the boost circuit 110 and a negative output terminal of the boost circuit 110. The direct current voltage outputted from the direct current power supply 200 is boosted through controlling the first switching tube Q1 to be switched on or switched off.

Also, the boost circuit 110 further includes a first capacitor C1 and a second capacitor C2. The first capacitor C1 is connected in parallel between the positive input terminal of the boost circuit 110 and the negative input terminal of the boost circuit 110 to perform filtering on the direct current voltage outputted from the direct current power supply 200. The second capacitor C2 is connected in parallel between the positive output terminal of the boost circuit 110 and the negative output terminal of the boost circuit 110 to perform filtering on an output voltage of the boost circuit 110, for obtaining a stable direct current bus voltage.

In some embodiments, as illustrated in FIG. 3, the bridge circuit 130 may include a first switch S1, a second switch S2, a third switch S3, and a fourth switch S4. Each of a first terminal of the first switch S1 and a first terminal of the second switch S2 are connected to a first terminal of the switching circuit 140. Each of a second terminal of the first switch S1 and a first terminal of the third switch S3 is connected to a negative output terminal of the boost circuit 110. Each of a second terminal of the second switch S2 and a first terminal of the fourth switch S4 is connected to a positive output terminal of the boost circuit 110. Each of a second terminal of the third switch S3 and a second terminal of the fourth switch S4 are connected to a second terminal of the switching circuit 140.

It should be noted that the first switch S1, the second switch S2, the third switch S3, and the fourth switch S4 may all be controllable switches, such as switching tubes. In this case, the controller is further configured to control the first switch S 1, the second switch S2, the third switch S3, and the fourth switch S4 to be switched on or switched off, to form the discharge loop by the boost circuit 110, the bridge circuit 130, and the switching circuit 140. Or, the first switch S1, the second switch S2, the third switch S3, and the fourth switch S4 are all uncontrollable switches, such as diodes. A cathode of the diode is the first terminal of a corresponding one of the first switch S1, the second switch S2, the third switch S3, and the fourth switch S4. An anode of the diode is the second terminal of the corresponding one of the first switch S1, the second switch S2, the third switch S3, and the fourth switch S4. Since the diode requires no additional control program, the first switch S1, the second switch S2, the third switch S3, and the fourth switch S4 are preferably diodes.

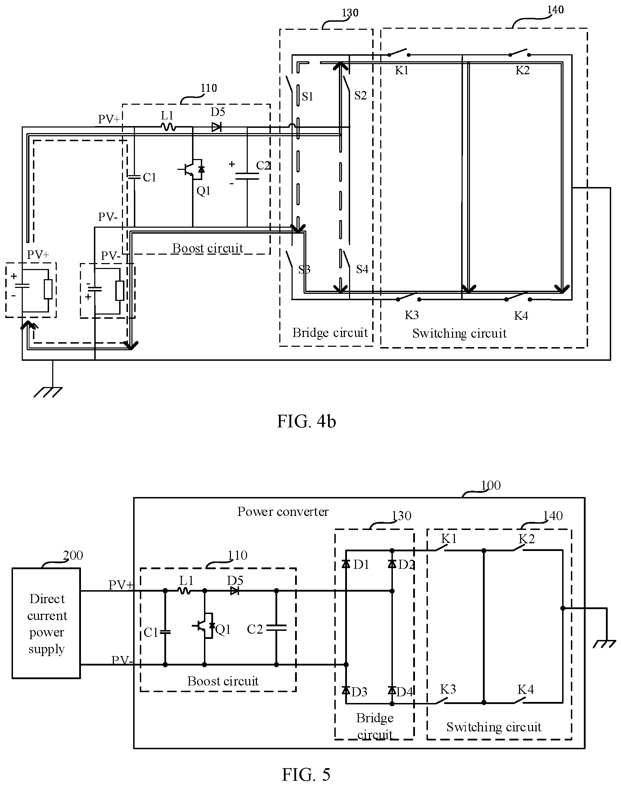

As illustrated in FIG. 5, when the first switch S1, the second switch S2, the third switch S3, and the fourth switch S4 are all diodes, each of a cathode of a first diode D1 and a cathode of a second diode D2 is connected to the first terminal of the switching circuit 140, each of an anode of the first diode D1 and a cathode of the third diode D3 is connected to the negative output terminal of the boost circuit 110, each of an anode of the second diode D2 and a cathode of the fourth diode D4 is connected to the positive output terminal of the boost circuit 110, and each of an anode of the third diode D3 and an anode of the fourth diode D4 is connected to the second terminal of the switching circuit 140. By utilizing the unidirectional conductivity of the diode in conjunction with the switching circuit 140, the positive input terminal of the boost circuit 110 or the negative input terminal of the boost circuit 110 can be grounded through the boost circuit 110, the bridge circuit 130, and the switching circuit 140 to discharge the common mode voltage to ground at the positive input terminal or the common mode voltage to ground at the negative input terminal.

In some embodiments, as illustrated in FIG. 3, the switching circuit 140 includes a first controllable switch K1, a second controllable switch K2, a third controllable switch K3, and a fourth controllable switch K4. A first terminal of the first controllable switch K1 serves as the first terminal of the switching circuit 140. A second terminal of the first controllable switch K1 is connected to a first terminal of the second controllable switch K2 to form a first node. A first terminal of the third controllable switch K3 serves as the second terminal of the switching circuit 140. A second terminal of the third controllable switch K3 is connected to a first terminal of the fourth controllable switch K4 to form a second node. The second node is connected to the first node. A second terminal of the second controllable switch K2 and a second terminal of the fourth controllable switch K4 are connected to serve as a third terminal of the switching circuit 140. The third terminal of the switching circuit 140 is connected to the ground.

It should be noted that the first controllable switch K1, the second controllable switch K2, the third controllable switch K3, and the fourth controllable switch K4 may all be switching tubes. Through controlling, by the controller, the first controllable switch K1, the second controllable switch K2, the third controllable switch K3, and the fourth controllable switch K4 to be switched on or switched off, the common mode voltage to ground at the positive input terminal of the boost circuit 110 and the common mode voltage to ground at the negative input terminal of the boost circuit 110 can be rapidly discharged.

Specifically, as illustrated in FIG. 3, the controller can be configured to control, subsequent to the direct current power supply 200 entering the off state, the first controllable switch K1, the second controllable switch K2, the third controllable switch K3, and the fourth controllable switch K4 to be in the on state, the second switch S2 and the third switch S3 to be in the on state, and the first switch S1 and the fourth switch S4 to be in the off state. As illustrated in FIG. 4a, the positive input terminal of the boost circuit 110 and the negative input terminal of the boost circuit 110 are short-circuited through the first inductor L1, the fifth diode D5, the second switch S2, the first controllable switch K1, the second controllable switch K2, the fourth controllable switch K4, the third controllable switch K3, and the third switch S3 sequentially (as illustrated by a solid double line in FIG. 4a). The common mode voltage to ground at the positive input terminal of the boost circuit 110 and the common mode voltage to ground at the negative input terminal of the boost circuit 110 are discharged simultaneously, which achieves a fast discharging speed. In addition, the positive input terminal of the boost circuit 110 is also connected to the negative input terminal of the boost circuit 110 through the first capacitor C1 (as illustrated by a dot dash line in FIG. 4a) for discharging. It should be noted that, the capacitor and the resistor in a dotted box in FIG. 4a are connected in parallel to represent a distributed capacitance of the direct current power supply 200 to ground. A voltage of the distributed capacitance of the direct current power supply 200 to ground is a common mode voltage to ground.

Alternatively, the controller can be configured to control, subsequent to the direct current power supply 200 entering the off state, the first controllable switch K1, the second controllable switch K2, the third controllable switch K3, and the fourth controllable switch K4 to be in the on state, and the first switch S1, the second switch S2, the third switch S3, and the fourth switch S4 to be in the on state. As illustrated in FIG. 4a, the positive input terminal of the boost circuit 110 and the negative input terminal of the boost circuit 110 are short-circuited through the first inductor L1, the fifth diode D5, the second switch S2, the first controllable switch K1, the second controllable switch K2, the fourth controllable switch K4, the third controllable switch K3, and the third switch S3 sequentially, or through the first inductor L1, the fifth diode D5, the second switch S2, and the first switch S1 sequentially, or through the first inductor L1, the fifth diode D5, the fourth switch S4, and the third switch S3 sequentially (as illustrated by a solid double line and a dotted double line in FIG. 4b). The common mode voltage to ground at the positive input terminal of the boost circuit 110 and the common mode voltage to ground at the negative input terminal of the boost circuit 110 are discharged simultaneously, which achieves a fast discharging speed. In addition, the positive input terminal of the boost circuit 110 is also connected to the negative input terminal of the boost circuit 110 through the first capacitor C1 (as illustrated by a dot dash line in FIG. 4b) for discharging.

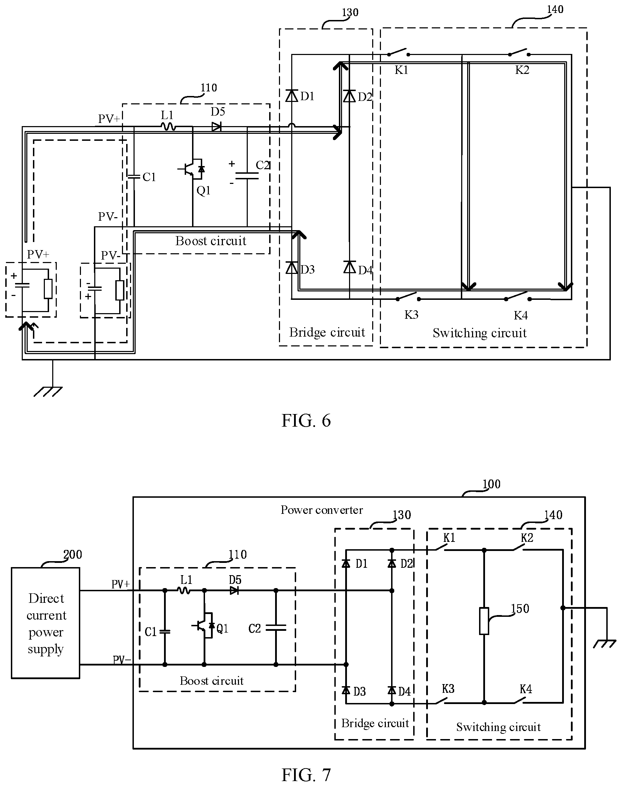

When the first switch S1, the second switch S2, the third switch S3, and the fourth switch S4 are diodes, as illustrated in FIG. 5, the controller can be configured to control, subsequent to the direct current power supply 200 entering the off state, the first controllable switch K1, the second controllable switch K2, the third controllable switch K3, and the fourth controllable switch K4 to be in the on state. As illustrated in FIG. 6, the positive input terminal of the boost circuit 110 and the negative input terminal of the boost circuit 110 are short-circuited through the first inductor L1, the fifth diode D5, the second diode D2, the first controllable switch K1, the second controllable switch K2, the fourth controllable switch K4, the third controllable switch K3, and the third diode D3 sequentially (as illustrated by a solid double line in FIG. 6). The common mode voltage to ground at the positive input terminal of the boost circuit 110 and the common mode voltage to ground at the negative input terminal of the boost circuit 110 are discharged simultaneously, which achieves a fast discharging speed. In addition, the positive input terminal of the boost circuit 110 is also connected to the negative input terminal of the boost circuit 110 through the first capacitor C1 (as illustrated by a dot dash line in FIG. 6) for discharging.

It should be noted that, in examples illustrated in FIG. 3 and FIG. 5, the first node and the second node may not be connected, in which case the common mode voltage to ground at the positive input terminal of the boost circuit and the common mode voltage to ground at the negative input terminal of the boost circuit are discharged simultaneously through controlling the plurality of controllable switches to be switched on simultaneously. In addition, the inverter circuit 120 is not specifically illustrated.

In some embodiments, as illustrated in FIG. 7 to FIG. 9, the power converter 100 further includes an energy dissipation element 150. The energy dissipation element 150 is connected in series in the discharge loop, such that discharging is realized through the energy dissipation element 150.

It should be noted that, in the present disclosure, no limitation is imposed on a type of the energy dissipation element 150. Exemplarily, the energy dissipation element 150 includes, but is not limited to, a voltage source, a resistor and a capacitor that are connected in parallel, a resistor, an inductor, and other devices that can generate dissipation, through which rapid discharging can be realized.

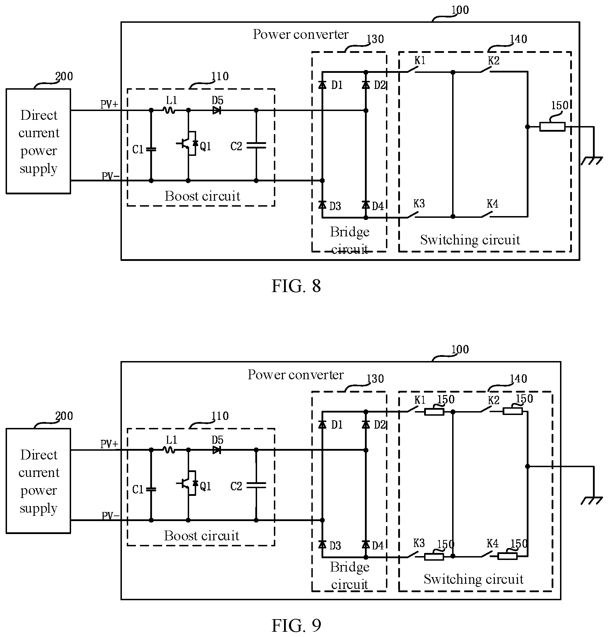

In the present disclosure, there is no limitation on a quantity and a position of the energy dissipation element 150. For example, the energy dissipation element 150 may be disposed in the bridge circuit 130, or in the switching circuit 140, or in each of the bridge circuit 130 and the switching circuit 140. When the energy dissipation element 150 is disposed in the switching circuit 140, the energy dissipation element 150 may be connected in series in at least one of the following manners: between at least one of the first node and the second node, between the third terminal of the switching circuit 140 and the ground, between the first terminal of the switching circuit 140 and the first node, between the first node and the third terminal of the switching circuit 140, between the second terminal of the switching circuit 140 and the second node, or between the second node and the third terminal of the switching circuit 140. Exemplarily, as illustrated in FIG. 7, one energy dissipation element 150 is connected in series between the first node and the second node. As illustrated in FIG. 8, one energy dissipation element 150 is connected in series between the third terminal of the switching circuit 140 and the ground. As illustrated in FIG. 9, one energy dissipation element 150 is connected in series between each pair of the first terminal of the switching circuit 140 and the first node, the first node and the third terminal of the switching circuit 140, the second terminal of the switching circuit 140 and the second node, and the second node and the third terminal of the switching circuit 140. In other embodiments of the present disclosure, one energy dissipation element 150 may be disposed at each of the above-mentioned positions.

It should be noted that, in examples illustrated in FIG. 7 to FIG. 9, subsequent to the direct current power supply 200 entering the off state, the plurality of controllable switches may be controlled to be switched on or switched off to discharge the common mode voltage to ground at the positive input terminal of the boost circuit 110 and the common mode voltage to ground at the negative input terminal of the boost circuit 110 simultaneously or separately. In addition, the inverter circuit 120 is not specifically illustrated.

In some embodiments, in terms of controlling, by the controller, the plurality of controllable switches to be switched on or switched off, the first controllable switch K1 and the fourth controllable switch K4 may be controlled to be switched on and the second controllable switch K2 and the third controllable switch K3 may be controlled to be switched off for discharging the common mode voltage to ground at the positive input terminal of the boost circuit 110, and the second controllable switch K2 and the third controllable switch K3 may be controlled to be switched on and the first controllable switch K1 and the fourth controllable switch K4 may be controlled to be switched off for discharging the common mode voltage to ground at the negative input terminal of the boost circuit 110. Therefore, the common mode voltage to ground at the positive input terminal and the common mode voltage to ground at the negative input terminal may be discharged separately.

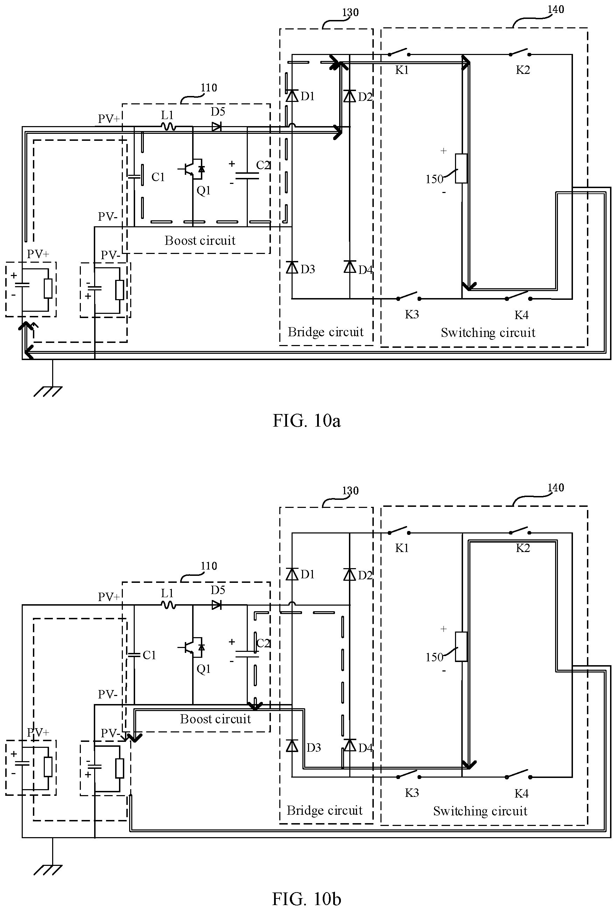

As an example, description is made with reference to FIG. 7. As illustrated in FIG. 7, the controller can be configured to control, subsequent to the direct current power supply 200 entering the off state, the first controllable switch K1 and the fourth controllable switch K4 to be switched on in a case where the common mode voltage to ground at the positive input terminal of the boost circuit 110 needs to be discharged. As illustrated in FIG. 10a, the positive input terminal of the boost circuit 110 and the ground are connected through the first inductor L1, the fifth diode D5, the second switch S2, the first controllable switch K1, the energy dissipation element 150, and the fourth controllable switch K4 sequentially, or through the first capacitor C1, the first diode D1, the first controllable switch K1, the energy dissipation element 150, and the fourth controllable switch K4 sequentially (as illustrated by a solid double line and a dotted double line in FIG. 10a). The common mode voltage to ground at the positive input terminal of the boost circuit 110 is discharged through the energy dissipation element 150. Also, the positive input terminal of the boost circuit 110 is further connected to the negative input terminal of the boost circuit 110 through the first capacitor C1 (as illustrated by a dot dash line in FIG. 10a) for discharging.

The controller can be configured to control the second controllable switch K2 and the third controllable switch K3 to be switched on in a case where the common mode voltage to ground at the negative input terminal of the boost circuit 110 needs to be discharged. As illustrated in FIG. 10b, the ground and the negative input terminal of the boost circuit 110 are connected through the second controllable switch K2, the energy dissipation element 150, the third controllable switch K3, and the third diode D3 sequentially, or through the second controllable switch K2, the energy dissipation element 150, the third controllable switch K3, the fourth diode D4, and the second capacitor C2 sequentially (as illustrated by a solid double line and a dotted double line in FIG. 10b). The common mode voltage to ground at the negative input terminal of the boost circuit 110 is discharged by the energy dissipation element 150. In addition, the negative input terminal of the boost circuit 110 is further connected to the positive input terminal of the boost circuit 110 through the first capacitor C1 (as illustrated by a dot dash line in FIG. 10b) for discharging.

Further, in practice, a fixed discharge method may be used for discharging. In particular, the controller is configured to, subsequent to the direct current power supply 200 entering the off state, enable the first controllable switch K1 and the fourth controllable switch K4 to be switched on sequentially or simultaneously and enable the second controllable switch K2 and the third controllable switch K3 to be switched off, to discharge the common mode voltage to ground at the positive input terminal of the boost circuit 110 in accordance with a discharge loop illustrated in FIG. 10a. Then, the first controllable switch K1 and the fourth controllable switch K4 are switched off and the second controllable switch K2 and the third controllable switch K3 are switched on, to discharge the common mode voltage to ground at the negative input terminal of the boost circuit 110 in accordance with a discharge loop illustrated in FIG. 10b. Then, the second controllable switch K2 and the third controllable switch K3 are switched off, and the first controllable switch K1 and the fourth controllable switch K4 are switched on, to discharge the common mode voltage to ground at the positive input terminal of the boost circuit 110 in accordance with the discharge loop illustrated in FIG. 10a. As the process repeats, the common mode voltage to ground at the positive input terminal of the boost circuit 110 and the common mode voltage to ground at the negative input terminal of the boost circuit 110 are discharged cyclically.

It should be noted that, such a discharge method is also applicable to examples such as FIG. 8 and FIG. 9. A specific discharge principle is not described in detail here. With such a discharge method, the common mode voltage to ground at the positive input terminal and the common mode voltage to ground at the negative input terminal can be discharged separately.

In some other embodiments, in terms of controlling, by the controller, the plurality of controllable switches to be switched on or switched off, the second controllable switch K2 and the fourth controllable switch K4 may be controlled to be in an on state, the first controllable switch K1 may be controlled to be switched on and the third controllable switch K3 may be controlled to be switched off for discharging the common mode voltage to ground at the positive input terminal of the boost circuit 110, and the third controllable switch K3 may be controlled to be switched on and the first controllable switch K1 may be controlled to be switched off for discharging the common mode voltage to ground at the negative input terminal of the boost circuit 110.

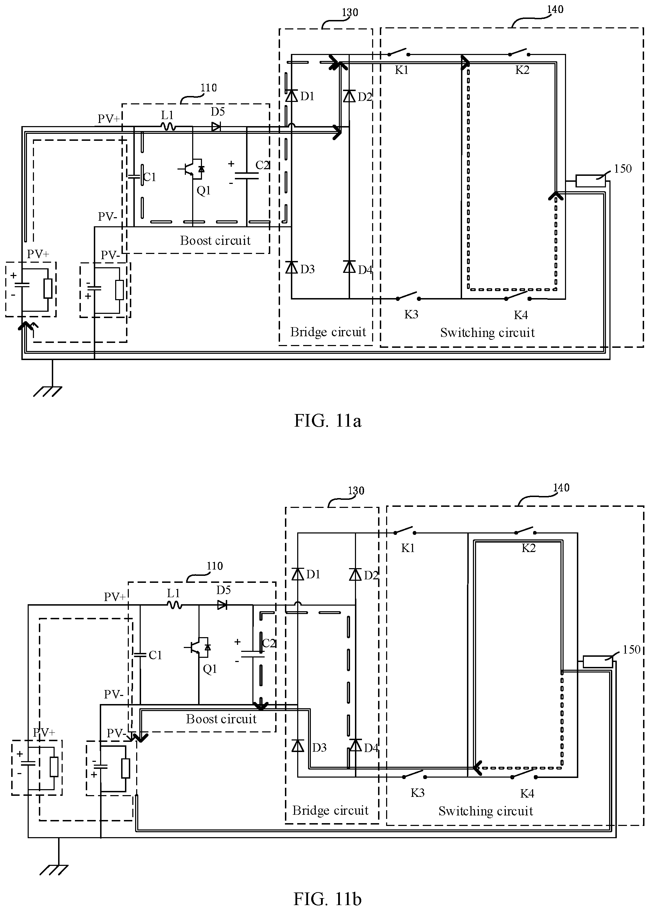

As an example, description is made with reference to FIG. 8. As illustrated in FIG. 8, the controller can be configured to control, subsequent to the direct current power supply 200 entering the off state, the second controllable switch K2 and the fourth controllable switch K4 to be in the on state, and then control the first controllable switch K1 to be switched on in a case where the common mode voltage to ground at the positive input terminal of the boost circuit 110 needs to be discharged. As illustrated in FIG. 11a, the positive input terminal of the boost circuit 110 and the ground are connected through the first inductor L1, the fifth diode D5, the second diode D2, the first controllable switch K1, the second controllable switch K2 and the fourth controllable switch K4, and the energy dissipation element 150 sequentially, or through the first capacitor C1, the first diode D1, the first controllable switch K1, the second controllable switch K2 and the fourth controllable switch K4, and the energy dissipation element 150 sequentially (as illustrated by a solid double line and a dotted double line in FIG. 11a). The common mode voltage to ground at the positive input terminal of the boost circuit 110 is discharged. Also, the positive input terminal of the boost circuit 110 is further connected to the negative input terminal of the boost circuit 110 through the first capacitor C1 (as illustrated by a dot dash line in FIG. 11a) for discharging.

The controller can be configured to control the third controllable switch K3 to be switched on in a case where the common mode voltage to ground at the negative input terminal of the boost circuit 110 needs to be discharged. As illustrated in FIG. 11b, the ground is connected to the negative input terminal of the boost circuit 110 through the energy dissipation element 150, the second controllable switch K2 and the fourth controllable switch K4, and the third controllable switch K3 and the third diode D3 sequentially, or the ground is connected to the negative input terminal of the boost circuit 110 through the energy dissipation element 150, the second controllable switch K2 and the fourth controllable switch K4, the third controllable switch K3, and the fourth diode D4 and the second capacitor C2 (as illustrated by a solid double line and a dotted double line in FIG. 11b). The common mode voltage to ground at the negative input terminal of the boost circuit 110 is discharged by the energy dissipation element 150. In addition, the negative input terminal of the boost circuit 110 is further connected to the positive input terminal of the boost circuit 110 through the first capacitor C1 (as illustrated by a dot dash line in FIG. 11b) for discharging.

Further, in practice, a fixed discharge method may be used for discharging. In particular, the controller is configured to enable, subsequent to the direct current power supply 200 entering the off state, the second controllable switch K2 and the fourth controllable switch K4 to be switched on sequentially or simultaneously and then enable the first controllable switch K1 to be switched on and the third controllable switch K3 to be switched off, to discharge the common mode voltage to ground at the positive input terminal of the boost circuit 110 in accordance with a discharge loop illustrated in FIG. 11a. Then, the first controllable switch K1 is switched off and the third controllable switch K3 is switched on, to discharge the common mode voltage to ground at the negative input terminal of the boost circuit 110 in accordance with a discharge loop illustrated in FIG. 11b. Then, the third controllable switch K3 is switched off, and the first controllable switch K1 is switched on, to discharge the common mode voltage to ground at the positive input terminal of the boost circuit 110 in accordance with the discharge loop illustrated in FIG. 11a. As the process repeats, the common mode voltage to ground at the positive input terminal of the boost circuit 110 and the common mode voltage to ground at the negative input terminal of the boost circuit 110 are discharged cyclically.

It should be noted that, such a discharge method is also applicable to examples such as FIG. 9. A specific discharge principle is not described in detail here. With such a discharge method, the common mode voltage to ground at the positive input terminal and the common mode voltage to ground at the negative input terminal can be discharged separately.

In yet other embodiments, in terms of controlling, by the controller, the plurality of controllable switches to be switched on or switched off, each of the first controllable switch K1, the second controllable switch K2, the third controllable switch K3, and the fourth controllable switch K4 can be controlled to be in an on state, for discharging the common mode voltage to ground at the positive input terminal of the boost circuit 110 and the common mode voltage to ground at the negative input terminal of the boost circuit 110 simultaneously.

As an example, description is made with reference to FIG. 7 and FIG. 8. As illustrated in FIG. 7, the controller is configured to control, subsequent to the direct current power supply 200 entering the off state, the first controllable switch K1, the second controllable switch K2, the third controllable switch K3, and the fourth controllable switch K4 to be in the on state. In this case, reference to the discharge loop can be made to FIG. 6, with a difference that a branch where the energy dissipation element 150 is located is short-circuited by the second controllable switch K2 and the fourth controllable switch K4. As illustrated in FIG. 8, the controller is configured to control, subsequent to the direct current power supply 200 entering the off state, the first controllable switch K1, the second controllable switch K2, the third controllable switch K3, and the fourth controllable switch K4 to be in the on state. In this case, reference to the discharge loop can be made to FIG. 6.

It should be noted that, such a discharge method is also applicable to examples such as FIG. 9. A specific discharge principle is not described in detail here. With such a discharge method, the common mode voltage to ground at the positive input terminal and the common mode voltage to ground at the negative input terminal can be discharged simultaneously.

In some embodiments, the power converter 100 further a first voltage detection circuit (not illustrated) and/or a second voltage detection circuit (not illustrated). The first voltage detection circuit is configured to detect the common mode voltage to ground at the positive input terminal of the boost circuit 110. The controller is further configured to discharge the common mode voltage to ground at the positive input terminal of the boost circuit 110 in response to the common mode voltage to ground at the positive input terminal of the boost circuit 110 reaching a predetermined voltage value. The second voltage detection circuit is configured to detect the common mode voltage to ground at the negative input terminal of the boost circuit 110. The controller is further configured to discharge the common mode voltage to ground at the negative input terminal of the boost circuit 110 in response to the common mode voltage to ground at the negative input terminal of the boost circuit 110 reaching the predetermined voltage value.

It should be noted that the predetermined voltage value may be any value greater than the safe voltage, which may be set as desired. The power converter 100 may include a first voltage detection circuit, or a second voltage detection circuit, or both the first voltage detection circuit and the second voltage detection circuit. The common mode voltage to ground at the positive input terminal of the boost circuit 110 and the common mode voltage to ground at the negative input terminal of the boost circuit 110 are detected by the first voltage detection circuit and the second voltage detection circuit, respectively, and compared with the predetermined voltage value, to realize intelligent discharging of the common mode voltage to ground.

In an exemplary embodiment of the present disclosure, subsequent to the direct current power supply 200 entering the off state, the common mode voltage to ground at the positive input terminal of the boost circuit 110 and the common mode voltage to ground at the negative input terminal of the boost circuit 110 gradually decrease, during which the common mode voltage to ground at the positive input terminal of the boost circuit 110 and the common mode voltage to ground at the negative input terminal of the boost circuit 110 can be detected in real time by the first voltage detection circuit and the second voltage detection circuit, respectively, and compared with the predetermined voltage value. When the common mode voltage to ground at the positive input terminal of the boost circuit 110 decreases to the predetermined voltage value, the plurality of controllable switches are controlled in the above-mentioned method to start discharging the common mode voltage to ground at the positive input terminal of the boost circuit 110. When the common mode voltage to ground at the negative input terminal of the boost circuit 110 decreases to the predetermined voltage value, the plurality of controllable switches are controlled in the above-mentioned method to start discharging the common mode voltage to ground at the negative input terminal of the boost circuit 110.

That is, the common mode voltage to ground at the positive input terminal of the boost circuit 110 and the common mode voltage to ground at the negative input terminal of the boost circuit 110 are detected by the first voltage detection circuit and the second voltage detection circuit, respectively. A time point of starting discharging the common mode voltage to ground at the positive input terminal of the boost circuit 110 and a time point of starting discharging the common mode voltage to ground at the negative input terminal of the boost circuit 110 are determined based on a relationship between each of the common mode voltage to ground at the positive input terminal of the boost circuit 110 and the common mode voltage to ground at the negative input terminal of the boost circuit 110 and the predetermined voltage value, to realize the intelligent discharging. It should be noted that subsequent to a start of the discharging, the common mode voltage to ground at the positive input terminal and the common mode voltage to ground at the negative input terminal can be discharged in a separate discharge method or in a simultaneous discharge method.

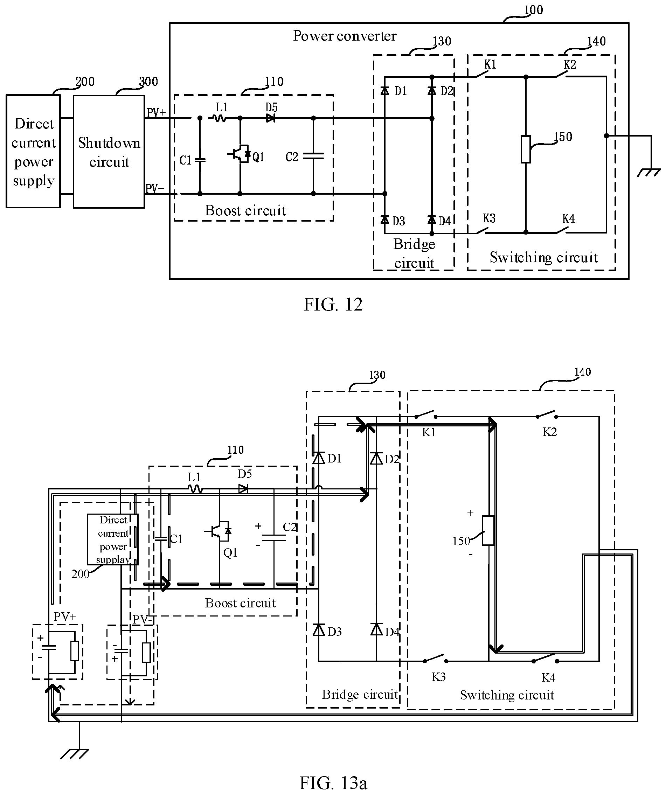

In some embodiments, as illustrated in FIG. 12, a shutdown circuit 300 is further connected in series between the direct current power supply 200 and the input terminal of the boost circuit 110. When the shutdown circuit 300 is in a safe mode, an output voltage of the direct current power supply 200 is smaller than a predetermined voltage threshold to enable the direct current power supply 200 to enter the off state. The predetermined voltage threshold is smaller than or equal to the safe voltage.

Exemplarily, the shutdown circuit 300 includes the shutdown device or the optimizer.

It should be noted that the shutdown circuit 300 includes a normal operation mode and a safe mode. The normal operation mode means that during normal operation of the system, a voltage, a current, or power of the direct current power supply 200 to which the input terminal is connected is transmitted by the shutdown circuit 300 to the boost circuit 110 at the output terminal. The safe mode means that the shutdown circuit 300 actively restricts a voltage, a current, or power at the input terminal or at the output terminal to keep the voltage, the current, or the power within a safe range for reducing dangerous accidents. When the shutdown circuit 300 includes the shutdown device, the normal operation mode of the shutdown circuit 300 includes a direct operation mode. When the shutdown circuit 300 includes the optimizer, the normal operation mode of the shutdown circuit 300 includes the direct operation mode, a Maximum PowerPoint Tracking (MPPT) operation mode, and a power operation mode. A specific structure and the normal operation mode of the shutdown circuit 300 are not limited in the present disclosure, as long as in the safe mode, the output voltage of the direct current power supply 200, i.e., the input voltage of the boost circuit 110, can be made to be smaller than the predetermined voltage threshold.

In an exemplary embodiment of the present disclosure, as illustrated in FIG. 12, during the normal operation of the system, the bridge circuit 130 and the switching circuit 140 do not operate, and the shutdown circuit 300 is in the normal operation mode. In this case, the direct current voltage outputted by the direct current power supply 200 is outputted to the boost circuit 110 through the shutdown circuit 300, boosted by the boost circuit 110, and provided to the subsequent circuit, e.g., to the inverter circuit 120, in which case the direct current voltage is inverted into an alternating current by the inverter circuit 120 to be outputted to the power grid or the alternating current load.

When the system needs maintenance or the inverter stops in an emergency, the inverter may be controlled to stop operation, and the shutdown circuit 300 may be controlled to enter the safe mode to enable the direct current power supply 200 to enter the off state, even if the output voltage of the direct current power supply 200, i.e., the input voltage of the boost circuit 110, is smaller than the predetermined voltage threshold. Then, the plurality of controllable switches are controlled to be switched on or switched off with the above-mentioned method for discharging the common mode voltage to ground at the positive input terminal of the boost voltage 110 and the common mode voltage to ground at the negative input terminal of the boost voltage 110, enabling the common mode voltage to ground at the positive input terminal of the boost voltage 110 and the common mode voltage to ground at the negative input terminal of the boost voltage 110 to be within the safe voltage.

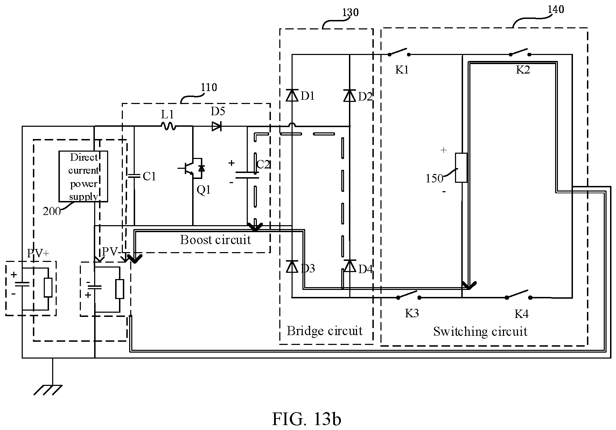

It should be noted that, when the shutdown circuit 300 includes the shutdown device, the shutdown device cuts off a connection between the direct current power supply 200 and the boost circuit 110, and thus the corresponding discharge loop is as described above. When the shutdown circuit 300 includes the optimizers, some of the optimizers do not cut off the connection between the direct current power supply 200 and the boost circuit 110, and thus the corresponding discharge loop further includes a branch where the direct current power supply 200 is located, in addition to a branch where the first capacitor C1 is located. Exemplarily, FIG. 13a is a discharge loop for the common mode voltage to ground at the positive input terminal of the boost circuit 110, and FIG. 13b is a switch circuit for the common mode voltage to ground at the negative input terminal of the boost circuit 110. FIG. 13a and FIG. 13b illustrate that the discharge loop further includes the branch where the direct current power supply 200 is located.

It should be noted that, in all of the above examples, the boost circuit 110 is described as including the first capacitor C1 and the second capacitor C2. In practice, the present disclosure may also be applied in the boost circuit 110 including neither the first capacitor C1 nor the second capacitor C2. The present disclosure is not specifically limited in this regard. In addition, in the above examples, the bridge circuit 130 is described as an uncontrollable bridge circuit. When the bridge circuit 130 is a controllable bridge circuit, reference to a control time sequence of the controllable bridge circuit can be made to the operation of the uncontrollable bridge circuit, which will not be described in detail herein. Further, operation processes of the shutdown circuit 300, the inverter, the bridge circuit 130, and the switching circuit 140 that are described above may be realized through control of one controller or different controllers. The present disclosure is not limited in this regard.

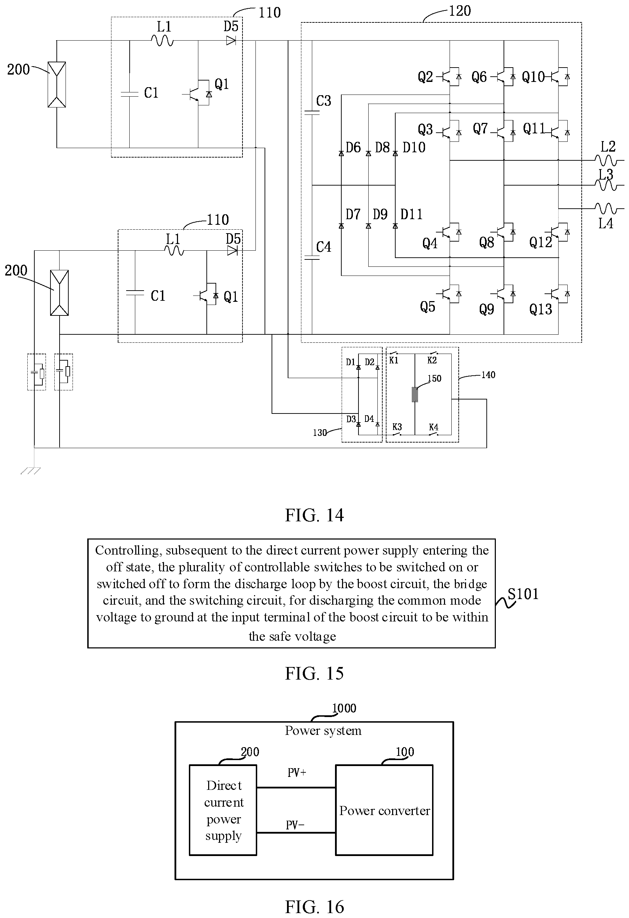

It should be noted that, a specific circuit structure of the inverter circuit 120 is not limited in the present disclosure. Exemplarily, as illustrated in FIG. 14, the inverter circuit 120 may be a Neutral-Point Clamped three-level inverter circuit composed of a third capacitor C3, a fourth capacitor C4, a sixth diode D6 to an eleventh diode D11, and a second switching tube Q2 to a thirteenth switching tube Q11. The input terminal of the inverter circuit 120 is connected to the output terminal of the boost circuit 110. The output terminal of the inverter circuit 120 may be connected to the power grid or the alternating current load through the second inductor L2 and the third inductor L3. Further, in this example, the input terminal of the inverter circuit 120 is connected to two boost circuits 110 connected in parallel. It should be understood that, the input terminal of the inverter circuit 120 may also be connected to three or more boost circuits 110 connected in parallel. When the input terminal of the inverter circuit 120 is connected to two or more boost circuits 110 connected in parallel, the bridge circuit 130 and the switching circuit 140 discharge the common mode voltages to ground at the input terminals of respective boost circuits 110 in a same way.

In summary, the power converter according to the embodiments of the present disclosure includes the bridge circuit and the switching circuit. The input terminal of the bridge circuit is connected to the output terminal of the boost circuit. The switching circuit is connected to each of the output terminal of the bridge circuit and the ground, and at least includes the plurality of controllable switches. Subsequent to the direct current power supply entering the off state, the plurality of controllable switches are controlled to be switched on or switched off to form the discharge loop by the boost circuit, the bridge circuit, and the switching circuit, for discharging the common mode voltage to ground at the input terminal of the boost circuit to be within the safe voltage. Therefore, the common mode voltage to ground at the input terminal of the boost circuit can be rapidly discharged by the bridge circuit and the switching circuit to be within the safe voltage, for meeting the discharge voltage requirement.

In some embodiments, a method for controlling a power converter is further provided. The method is applied in the power converter described above. As illustrated in FIG. 15, the method for controlling the power converter includes operations at blocks.

At S101, subsequent to the direct current power supply entering the off state, the plurality of controllable switches are controlled to be switched on or switched off to form the discharge loop by the boost circuit, the bridge circuit, and the switching circuit, for discharging the common mode voltage to ground at the input terminal of the boost circuit to be within the safe voltage.

In some embodiments, an operation of controlling the plurality of controllable switches to be switched on or switched off to form the discharge loop by the boost circuit, the bridge circuit, and the switching circuit includes: controlling the first controllable switch and the fourth controllable switch to be switched on and the second controllable switch and the third controllable switch to be switched off for discharging a common mode voltage to ground at a positive input terminal of the boost circuit, and controlling the second controllable switch and the third controllable switch to be switched on and the first controllable switch and the fourth controllable switch to be switched off for discharging a common mode voltage to ground at a negative input terminal of the boost circuit; or controlling the second controllable switch and the fourth controllable switch to be in an on state, controlling the first controllable switch to be switched on and the third controllable switch to be switched off for discharging the common mode voltage to ground at the positive input terminal of the boost circuit, and controlling the third controllable switch to be switched on and the first controllable switch to be switched off for discharging the common mode voltage to ground at the negative input terminal of the boost circuit; or controlling each of the first controllable switch, the second controllable switch, the third controllable switch, and the fourth controllable switch to be in an on state, for discharging the common mode voltage to ground at the positive input terminal of the boost circuit and the common mode voltage to ground at the negative input terminal of the boost circuit simultaneously.

In some embodiments, the method further includes: detecting the common mode voltage to ground at the positive input terminal of the boost circuit, and discharging the common mode voltage to ground at the positive input terminal of the boost circuit in response to the common mode voltage to ground at the positive input terminal of the boost circuit reaching a predetermined voltage value; and/or detecting the common mode voltage to ground at the negative input terminal of the boost circuit, and discharging the common mode voltage to ground at the negative input terminal of the boost circuit in response to the common mode voltage to ground at the negative input terminal of the boost circuit reaching the predetermined voltage value.

In some embodiments, the method further includes: controlling, when the shutdown circuit is in a safe mode, an output voltage of the direct current power supply to be smaller than a predetermined voltage threshold to enable the direct current power supply to enter the off state.

It should be noted that, reference to other details of the method for controlling the power converter can be made to the above relevant description of the power converter, and thus details thereof will be omitted here.

With the method for controlling the power converter according to the embodiments of the present disclosure, subsequent to the direct current power supply entering the off state, the plurality of controllable switches are controlled to be switched on or switched off to form the discharge loop by the boost circuit, the bridge circuit, and the switching circuit, for discharging the common mode voltage to ground at the input terminal of the boost circuit to be within the safe voltage. Therefore, the common mode voltage to ground at the input terminal of the boost circuit can be rapidly discharged by the bridge circuit and the switching circuit to be within the safe voltage, for meeting the discharge voltage requirement.

In some embodiments, a power system 1000 is further provided. As illustrated in FIG. 16, the power system 1000 includes the direct current power supply 200 and the above-mentioned power converter 100. The power converter 100 has an input terminal connected to the direct current power supply 200.

In some embodiments, the direct current power supply 200 includes one of a photovoltaic assembly, a storage battery, or a fuel cell.

It should be noted that, reference to other details of the power system 1000 can be made to the above relevant description of the power converter, and thus details thereof will be omitted here.

For the power system according to the embodiments of the present disclosure, with the above-mentioned power converter, the common mode voltage to ground at the input terminal of the boost circuit can be rapidly discharged by the bridge circuit and the switching circuit to be within the safe voltage, for meeting the discharge voltage requirement.

It should be noted that each part of the present disclosure can be implemented in hardware, software, firmware, or any combination thereof. In the above embodiments, a number of steps or methods can be implemented using software or firmware stored in a memory and executed by a suitable instruction execution system. For example, when implemented in hardware, as in another embodiment, it can be implemented by any one or combination of the following technologies known in the art: a discrete logic circuit having logic gate circuits for implementing logic functions on data signals, an application-specific integrated circuit with suitable combined logic gates, a Programmable Gate Array (PGA), a Field Programmable Gate Array (FPGA), etc.

Reference throughout this specification to terms such as "an embodiment," "some embodiments," "an example," "a specific example," or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, unless otherwise specifically defined.

In the present disclosure, unless otherwise clearly specified and limited, terms such as "install," "connect," "connect to," "fix," and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those of ordinary skill in the art, the specific meaning of the above-mentioned terms in the present disclosure can be understood according to specific circumstances.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

## Claims

1. A power converter, comprising a boost circuit, an inverter circuit, a bridge circuit, a switching circuit, and a controller, the boost circuit having an input terminal connected to a direct current power supply and an output terminal connected to each of an input terminal of the inverter circuit and an input terminal of the bridge circuit, the switching circuit being connected to each of an output terminal of the bridge circuit and ground, and the switching circuit at least comprising a plurality of controllable switches, wherein:
the controller is configured to control, subsequent to the direct current power supply entering an off state, the plurality of controllable switches to be switched on or switched off to form a discharge loop by the boost circuit, the bridge circuit, and the switching circuit, for discharging a common mode voltage to ground at the input terminal of the boost circuit to be within a safe voltage.

2. The power converter according to claim 1, wherein the bridge circuit comprises a first switch, a second switch, a third switch, and a fourth switch, each of a first terminal of the first switch and a first terminal of the second switch being connected to a first terminal of the switching circuit, each of a second terminal of the first switch and a first terminal of the third switch being connected to a negative output terminal of the boost circuit, each of a second terminal of the second switch and a first terminal of the fourth switch being connected to a positive output terminal of the boost circuit, and each of a second terminal of the third switch and a second terminal of the fourth switch being connected to a second terminal of the switching circuit.

3. The power converter according to claim 2, wherein the first switch, the second switch, the third switch, and the fourth switch are all controllable switches or uncontrollable switches, wherein:
the controller is further configured to control, when the first switch, the second switch, the third switch, and the fourth switch are all controllable switches, the first switch, the second switch, the third switch, and the fourth switch to be switched on or switched off, to form the discharge loop by the boost circuit, the bridge circuit, and the switching circuit.

4. The power converter according to claim 3, wherein each of the first switch, the second switch, the third switch, and the fourth switch is a diode, a cathode of the diode being the first terminal of a corresponding one of the first switch, the second switch, the third switch, and the fourth switch, and an anode of the diode being the second terminal of the corresponding one of the first switch, the second switch, the third switch, and the fourth switch.

5. The power converter according to any one of claims 2 to 4, wherein the switching circuit comprises a first controllable switch, a second controllable switch, a third controllable switch, and a fourth controllable switch, a first terminal of the first controllable switch being the first terminal of the switching circuit, a second terminal of the first controllable switch being connected to a first terminal of the second controllable switch to form a first node, a first terminal of the third controllable switch being the second terminal of the switching circuit, a second terminal of the third controllable switch being connected to a first terminal of the fourth controllable switch to form a second node, the second node being connected to the first node, a second terminal of the second controllable switch and a second terminal of the fourth controllable switch being connected as a third terminal of the switching circuit, and the third terminal of the switching circuit being connected to the ground.

6. The power converter according to claim 5, further comprising an energy dissipation element connected in series in the discharge loop.

7. The power converter according to claim 6, wherein the energy dissipation element comprises one of a voltage source, a resistor and a capacitor that are connected in parallel, a resistor, or an inductor.

8. The power converter according to claim 6, wherein the energy dissipation element is connected in series in at least one of the following manners: between at least one of the first node and the second node, between the third terminal of the switching circuit and the ground, between the first terminal of the switching circuit and the first node, between the first node and the third terminal of the switching circuit, the second terminal of the switching circuit and the second node, or between the second node and the third terminal of the switching circuit.

9. The power converter according to claim 6, wherein the controller is configured to:
control the first controllable switch and the fourth controllable switch to be switched on and the second controllable switch and the third controllable switch to be switched off for discharging a common mode voltage to ground at a positive input terminal of the boost circuit, and control the second controllable switch and the third controllable switch to be switched on and the first controllable switch and the fourth controllable switch to be switched off for discharging a common mode voltage to ground at a negative input terminal of the boost circuit; or
control the second controllable switch and the fourth controllable switch to be in an on state, control the first controllable switch to be switched on and the third controllable switch to be switched off for discharging the common mode voltage to ground at the positive input terminal of the boost circuit, and control the third controllable switch to be switched on and the first controllable switch to be switched off for discharging the common mode voltage to ground at the negative input terminal of the boost circuit; or
control each of the first controllable switch, the second controllable switch, the third controllable switch, and the fourth controllable switch to be in an on state, for discharging the common mode voltage to ground at the positive input terminal of the boost circuit and the common mode voltage to ground at the negative input terminal of the boost circuit simultaneously.

10. The power converter according to claim 9, further comprising:
a first voltage detection circuit configured to detect the common mode voltage to ground at the positive input terminal of the boost circuit, wherein the controller is further configured to discharge the common mode voltage to ground at the positive input terminal of the boost circuit in response to the common mode voltage to ground at the positive input terminal of the boost circuit reaching a predetermined voltage value; and/or
a second voltage detection circuit configured to detect the common mode voltage to ground at the negative input terminal of the boost circuit, wherein the controller is further configured to discharge the common mode voltage to ground at the negative input terminal of the boost circuit in response to the common mode voltage to ground at the negative input terminal of the boost circuit reaching the predetermined voltage value.

11. The power converter according to any one of claims 1 to 4, wherein a shutdown circuit is further connected in series between the direct current power supply and the input terminal of the boost circuit, wherein when the shutdown circuit is in a safe mode, an output voltage of the direct current power supply is smaller than a predetermined voltage threshold to enable the direct current power supply to enter the off state.

12. A method for controlling a power converter, the method being applied in the power converter according to any one of claims 1 to 11, and the method comprising:
controlling, subsequent to the direct current power supply entering the off state, the plurality of controllable switches to be switched on or switched off to form the discharge loop by the boost circuit, the bridge circuit, and the switching circuit, for discharging the common mode voltage to ground at the input terminal of the boost circuit to be within the safe voltage.

13. A power system, comprising:
a direct current power supply; and
the power converter according to any one of claims 1 to 11, the power converter having an input terminal connected to the direct current power supply.
